# EUROPEAN PATENT APPLICATION

(11) **EP 4 389 398 A1**
(43) Date of publication of application: **26.06.2024**
(21) Application number: 22315352.9
(22) Date of filing: 23.12.2022
(51) Int. Cl.: B29C 64/135, B29C 64/268, B29C 64/393, B33Y 10/00, B33Y 30/00, B29C 64/273

(54) **STEREOLITHOGRAPHIC APPARATUS WITH DIFFRACTIVE OPTICAL ELEMENT AND METHOD FOR CONTROLLING THE STEREOLITHOGRAPHIC APPARATUS**

(71) Applicant: MULTIPHOTON OPTICS GMBH, 97076 Würzburg (DE); Institut Mines Telecom - IMT Atlantique - Bretagne - Pays de la Loire, 29238 Brest Cedex 3 (FR)
(72) Inventor: Hilbert, Fabian, 97076 Würzburg (DE); Heggarty, Kevin, 29238 Brest Cedex 3 (FR); Perez Covarrubias, Luis, 97236 Randersacker (DE); Carlier, Quentin, 29200 Brest (FR); Baldeck, Patrice, 38220 Vizille (FR)
(74) Representative: Strehl Schübel-Hopf & Partner

(57) **Abstract**

A stereolithographic apparatus for manufacturing a three-dimensional structure by means of laser lithography in a lithography material (24), the apparatus including a diffractive optical element (14) for splitting a primary laser beam into a plurality of secondary laser beams (16a - 16c) generating a two-dimensional array of spots (28) in a single pulse, wherein the two-dimensional array of spots (28) includes a plurality of parallel rows of spots.

It is proposed that any given point in at-least a portion of the target volume is exposed by spots (28) of at least two distinct rows out of the plurality of parallel rows of spots (28).

## Description

The invention relates to a stereolithographic apparatus with a diffractive optical element according to the. preamble of claim 1 and to a method for controlling such a stereolithographic apparatus.

The fabrication of high resolution (structures < 200nm), fully 3D structures by multi-photon polymerisation is now a mature and commercially available technology. However, the extension of the technology to a wider range of applications is currently limited by the slow write speed resulting from the sequential nature of most implementations based on a single scanned laser beam.

Various attempts have been made to parallelize the process so as to enable the simultaneous manufacturing of multiple structures.

The document Geng, Q., Wang, D., Chen, P. et al. Ultrafast multi-focus 3-D nano-fabrication based on two-photon polymerization. Nat Commun 10, 2179 (2019) https://doi.org/10.1038/s41467-019-10249-2 is an example of an academic paper aiming to increase plot rates by parallelisation of the write process using a digital micromirror device (DMD) scanner. Further proposals include using Spatial Light Modulators (SLM) and Diffractive Optical Elements (DOE) to produce multiple write spots simultaneously, but these techniques are not yet proposed commercially. SLM based techniques offer the flexibility of reconfigurable numbers of write beams and reconfigurable spatial distributions but lower optical efficiency and reduced parallelisation. DOE based techniques offer higher optical efficiency and higher parallelisation factors but less configurability and are generally limited to the fabrication of periodic or quasi-periodic patterns by the fixed nature of the DOE output pattern.

One of the simplest parallelisation techniques is to position a spot array DOE at an appropriate place on a pulsed laser write beam path in order to produce, for example an NxM write spot array in the write plane. This NxM spot array can then be scanned in the usual manner (using galvo scan mirrors to scan the beams and/or XYZ translation tables to scan the substrate) to simultaneously polymerise an NxM array of 3D structures in a suitable photosensitive resin, each on one of the NxM-sub-fields into which the entire writing field is subdivided. The scanning movement of each of the NxM laser spots is limited to the pertinent sub-field and follows a convoluted three-dimensional trajectory designed to create one of the desired 3D-structures.

In practice, this simple parallelisation technique has several limitations, including that
- the spot array produced by real DOEs is not perfectly uniform (due both to algorithm limitations and fabrication tolerances/constraints) so some write spots contain more optical power than others and the individual objects in the fabricated array may not be of the same size and/or the degree of conversion may vary, which may result in a variation of physical properties across the structures,
- proximity effects resulting from the different local environments of the different spots (different numbers of neighbour spots at the array centre, edge and corners) tend to cause central spots to produce stronger polymerisation than outer spots, particularly when using closely spaced spots (less than a few microns),
- projection lens power roll-off also causes the outer spots of the array to be of relatively lower light power and so produce weaker polymerisation than the central spots (in extreme cases the outer spots can even be vignetted and the corresponding structures lost completely).
- in this approach, the scanning distances involved (equal to or smaller than the interspot distance) are small. So when large area/volume structures are fabricated by scanning, then field stitching is required.
- the XY translation tables/galvo scan mirrors must make many accelerations, decelerations and direction changes. They therefore rarely reach their optimum translation speed and the overall plot rate can be slowed considerably, depending on the structure size and hardware specifications.

The invention is based on the problem of overcoming the limitations or at least reducing the impact of the limitations indicated above and hence improving the homogeneity of the physical properties across the structures optimising the overall plot rate and system performance of a stereolithographic apparatus and to provide a method for operating such an apparatus.

The problem is solved by a device having the features of claim 1 and a method according to claim 10. Advantageous embodiments of the invention are defined in the dependent claims.

A first aspect of the invention relates to a stereolithographic apparatus for manufacturing a three-dimensional structure by means of laser lithography in a lithography material. The structure may in particular be a periodic structure including repeated identical or similar patterns arranged in a pitch corresponding to a period length.

The apparatus includes a laser source for generating a primary laser beam, wherein the laser beam is preferably a pulsed laser with a predetermined or adjustable pulse period.

The apparatus further includes a diffractive optical element (DOE) for splitting the primary laser beam into a plurality of secondary laser beams. In one embodiment of the invention, the DOE is a fixed DOE. In an alternative embodiment, the DOE is a reconfigurable DOE displayed on a Spatial Light Modulator (SLM).

The apparatus further includes a projection objective configured to focus the plurality of secondary laser beams into the lithography material so as to simultaneously expose the lithography material in an array of spots in a single pulse, wherein the two-dimensionalarray of spots includes a plurality of parallel rows and/or columns of spots. Preferably, the longitudinal direction of the rows is parallel to the scan direction. In the context of this specification the invention, the expression "expose" does not necessarily mean that the lithography material is fully polymerized. As will be explained in more detail below, any given point is exposed by multiple spots such that the radiation doses of the multiple exposures are summed such that the total dose exceeds the polymerization threshold while this is not necessarily true for the individual doses. Since the laser intensity per spot can be reduced in comparison to systems in which one exposure yields full polymerization, the number of spots in the array can be increased for a given laser power.

The apparatus further includes a movement mechanism for moving the plurality of spots in relation to the lithography material in a scan direction, wherein, in this context, moving the spots means moving the foci of the secondary laser beams by either moving the DOE and/or the projection objective and/or a galvo mirror system and/or moving a substrate or bath of the lithography material.

The apparatus further includes a control unit configured to control the output power of the laser source and the movement mechanism to generate spatio-temporal radiation pattern calculated so as to polymerize the lithography material in a target volume corresponding to the three-dimensional structure. The control unit may be a general-purpose computer with a software driving the actuators of the apparatus, e.g. a sample table, the DOE or a galvo mirror system for re-directing the laser beams.

According to the invention, the control unit is configured to control the movement mechanism and the laser source such that any given point in at least a portion of the target volume is exposed by at least two distinct spots out of the plurality of parallel rows and/or columns of spots. Since the volume to be polymerized is exposed multiple times by different spots, the total exposure dose is a sum of the exposure doses of the individual spots and the tolerances or variations in the individual spots are averaged out, irrespective of whether the variations stem from imprecisions in manufacturing of the DOE, form spatio-temporal proximity effects or other effects. As a result, the polymerized structures being generated have improved surface quality with better smoothness values and, in particular in the case of repeated patterns, a high degree of uniformity. At the same time, the use of an array of spots increases the overall throughput of the device by means of parallelization.

The overlapping exposure with different spots allow to use scan tables at speeds, with spot numbers and high laser powers not usable without overlap plotting because a single scanned spot or "column" of spots would have to be scanned more slowly to produce sufficient spot overlap to reach the polymerization threshold whereas the multi-spot DOE overlap technique the extra spots along the scanned "row" allow the inventors to create overlap even when the individual spots are moving too quickly to produce sufficient overlap individually.

In a preferred embodiment, the three-dimensional structure to be fabricated is periodic in the direction orthogonal to the row direction of the plurality of parallel rows of spots, wherein the two-dimensional array of spots includes spots with intensities being non-uniform in the direction orthogonal to the row direction and approximately uniform intensities in the scan direction.

It is further proposed that the control unit is configured to control the movement mechanism and the laser source such that any given point in at least a portion of the target volume is exposed by spots of each of the columns of the array.

According to the invention, the written patterns need not be perfectly periodical but may be modulated. In this case, the control unit is configured to modulate the intensity of the primary laser beam upon moving the spots in the scan direction and/or upon moving to a new scan line.

According to the invention, the spatio-temporal radiation pattern includes focusing different secondary laser beams at the same point by overlapping spots from different columns of the array at different points in time. As the spots are never of perfectly identical intensity in real life, the radiation doses differ between the different positions on the spot array. Successively focusing different secondary laser beams on the same point in the photosensitive resin or writing in a strongly overlapping manner entails an averaging effect such that differences are averaged out, ultimately leading to smoother and more precise structures. In a preferred embodiment, the inter-pulse step and laser pulse repetition rates will be chosen such that each point along the scan line receives at least one pulse from all of the spots along the scan line to produce maximum overlap and structure smoothness.

In a preferred embodiment of the invention, the calculation of the spatio-temporal radiation pattern accounts for indirect polymerization due to spatio-temporal proximity effects and includes calculating a spatial polymerization distribution approximating the target volume, wherein the calculation of the spatial polymerization distribution includes calculating the expected degree of polymerization at a plurality of predetermined points.

The degree of polymerization at one pre-determined point is calculated based on direct polymerization due to a radiation dose resulting from the focusing of the secondary laser beams in a spot at the predetermined point, and indirect polymerization due to spatio-temporal proximity effects resulting from the focusing of the secondary laser beams in a spot nearby the predetermined point.

The spatio-temporal proximity effects can be reduced by modifying the diffractive optical element (DOE). In one embodiment, the DOE is configured to compensate at least a roll-off and/or vignetting of optical elements in a light path including the projection objective. In a further embodiment and optionally in addition to the compensation of the roll-off and/or vignetting, the DOE is configured to compensate at least effects of indirect polymerization due to spatial proximity effects resulting from the focusing of the secondary laser beams in other spots of said array of spots.

By adjusting the number and/or separation of the spots along the scan line and/or the laser repetition rate and/or scan speed it becomes possible to control the overlap of the laser spot pulses and optimise overall plot rate and structure smoothness.

A further aspect of the invention relates to a method for controlling a stereolithographic apparatus for manufacturing a three-dimensional structure by means of laser lithography in a lithography material, the method including focusing plurality of secondary laser beams into the lithography material so as to simultaneously expose the lithography material in a plurality of spots and moving the plurality of spots in relation to the lithography material, wherein a laser power of the laser source and the movement of the plurality of spots mechanism are controlled according to a spatio-temporal radiation pattern calculated so as to polymerize the lithography material in a target volume corresponding to the three-dimensional structure.

It is proposed that the method includes controlling the movement mechanism (and the laser source) such that any given point in at least a portion of the target volume is exposed by spots from at least two distinct columns out of the two-dimensional array of spots.

The use of 2D spot arrays can bring numerous advantages:
- the precise control of the spot power in a DOE generated spot array is very difficult and in practical DOEs the obtained spot power varies around the nominal value. In a 1D array or single-spot writing strategies, these variations are directly visible and can result in proportional variations in the size and shape of structures produced by a particular spot and/or in variation of the degree of conversion, which may induce a change of physical properties of the fabricated structures. When using a 2D spot array, all the spots along a scan line direction may contribute (through the controlled overlap of the laser pulse positions as the line is scanned) to the polymerisation of each part of a written structure. The averaging effect produced by the use of several different spots will significantly reduce the influence of DOE spot intensity variations (the average intensity of the spots along a scan line will be closer to the desired intensity) and produce more uniform polymerisation. In this way the design and fabrication constraints for the DOE are reduced significantly.
- The averaging effect of using several DOE spots along a scan line to produce the desired polymerisation is also advantageous in reducing the influence of other system limitations such as laser pulse power variations, pulse jitter, table vibrations etc ... and can permit lower specification (and lower cost) tables and lasers to be used.
- The plot speed increases obtained by the use of multi-spot parallelisation and high pulse rate lasers with spot overlap and high scan rates are not of the same nature or dependence on the number of spots or scan rate. With fast scan rates, temporal aspects of the photochemical Multi-Photon Polymerziation (MPP) process are important, whereas with multi-spot arrays the spatial aspects become significant. The use of scanned 2D arrays of spots allows these different aspects to be finely controlled and leveraged. This can be achieved for example by correct choice of the number and separation of spots in the spot array (which are not necessarily the same along the scan direction and orthogonal to this direction) to help obtain an optimal compromise between line scan rate, spot pulse overlap and the number of simultaneous scan lines and so maximise the overall plot rate.

Further features and advantages will be apparent from the following description of the embodiments and figures. The entire description, claims and figures disclose features of the invention in specific embodiments and combinations. The person skilled in the art will also consider the features individually and combine them into further combinations or sub-combinations to adapt the invention, as defined in the claims, to his needs or to specific fields of application.

The figures illustrate the following:
Fig. 1 illustrates a stereolithographic apparatus according to a first embodiment of the invention;
Fig. 2a - 2d is an example of a movement of an array of laser foci by a control unit of a stereolithographic apparatus according to the invention;
Fig. 3 is a schematic illustration for a method including the writing of different lines with different laser intensities to generate a blazed grating;
Fig. 4 is an image of a blazed grating generated according to the method of Fig. 3;
Fig. 5 is a schematic illustration of the polymerisation voxels produced by a DOE with non-uniform spot intensities;
Fig. 6a is a top view of the spots generated by the DOE according to Fig. 5;
Fig. 6b is a grating generated using a DOE according to Fig. 5 and 6a; amd
Fig. 7 is a schematic illustration of a security feature generated with an apparatus according to the invention.

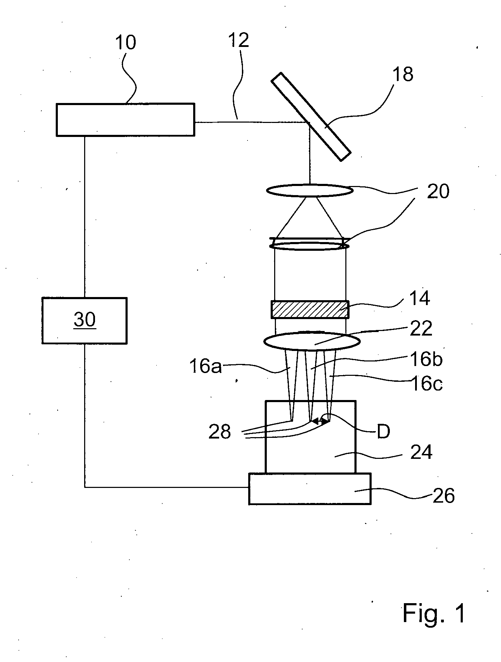

Fig. 1 shows stereolithographic apparatus according to the invention including a laser source 10 for generating a primary laser beam 12, wherein the laser beam is a pulsed laser with a predetermined or adjustable pulse period. The apparatus further includes a mirror system 18 and a beam expander 20 for expanding the primary laser beam 12, which is then led into a diffractive optical element 14 (DOE) for splitting the primary laser beam into a plurality of secondary laser beams 16a - 16c. The DOE 14 may be an active or passive diffractive element of any type (e.g. transparent elements with micro surface structure, spatial light modulator).

The apparatus further includes a projection objective 22 configured to focus the plurality of secondary laser beams 16a - 16c into a bath or layer of lithography material 24 so as to simultaneously expose the lithography material in an array of spots 28 with a predetermined inter-spot distance D in a first direction in a single pulse, wherein the spot distance D is identical to the period length of the three-dimensional structure to be written, which, in this case is a grating periodic in a row direction of the spots 28. The skilled person will appreciate that the period length is not necessarily the same as the inter-spot distance D. It can for example be a sub-multiple of this distance. In general, the inter-spot distance D also determines the periodicity of the written 3D structure which must be an integer fraction of D.

In the embodiment of Fig. 1, the spot array DOE 14 is positioned at an appropriate place on the pulsed laser write beam path of the primary laser beam 12 in order to produce an NxM write spot array 28 in a write plane. This NxM spot array 28 can then be scanned in a known manner, e.g. using galvo scan mirrors of the mirror system 18 to scan the beams and/or the XYZ translation table 26 to scan the substrate or material 24 to simultaneously expose an NxM array spots in the lithography material 24, which is a suitable photosensitive resin. In a preferred embodiment, the wavelength of the laser beam 12 is selected to trigger two- or multiple-photon polymerization reactions in the lithography material 24. The mirror system 18 and the XYZ translation table 26 constitute a movement mechanism 18, 26 for moving the plurality spots 28 all three spatial directions in relation to the lithography material 24, wherein, in this context, moving the spots 28 means moving the foci of the secondary laser beams 16a - 16c by either moving the DOE and/or the projection objective 22 and/or moving a substrate or bath of the lithography material. In some applications, spots 28 are scanned in a line wise manner along essentially parallel lines, wherein the direction of the lines is referred to as the "scan direction" in what follows.

Note that, in the following, all applications for parallelisation with a DOE-generated spot array are described using spots 28 which are arranged on a rectangular grid with constant distances / spot distances D between the generated spots 28. This is done to ease the understanding of the concept, while the design and fabrication of DOEs as well as their application according to the invention is not limited to such an arrangement. In general, all following concept scan in principle be applied to arbitrary spot patterns which are generated by DOEs.

The apparatus further includes a control unit 30 configured to control a laser power of the laser source 10 and the movement mechanism 18, 26 so as to produce a spatio-temporal radiation pattern'calculated so as to polymerize the lithography material 24 in a target volume corresponding to the three-dimensional periodic structure, e.g. a grating or an iridescent or holographic security label. The control unit 30 may be a general-purpose computer with a software driving the actuators of the apparatus, e.g. the sample table 26 the DOE 14 or the galvo mirror system 18 for re-directing the laser beams 16a - 16c.

The control unit 30 can be configured to control the movement mechanism 18, 26 such that the spots 28 are moved by a small distance D1 smaller than the inter-spot distance D of the array between subsequent laser pulses of the laser source. Once the spots 28 have moved a distance larger than the spot distance D, the areas / voxels exposed by one of the spots 28 in the array will overlap with the areas / voxels exposed by another one of the spots 28 in the same row. Once the spots 20 have moved a distance greater than the length of the rows in the array, the newly exposed areas / voxels are exposed by each of the spots 28 of the row. In alternative embodiments of the invention, the inter-spot distance of the array can be set greater than the inter-pulse distance so as to achieve high scanning speeds.

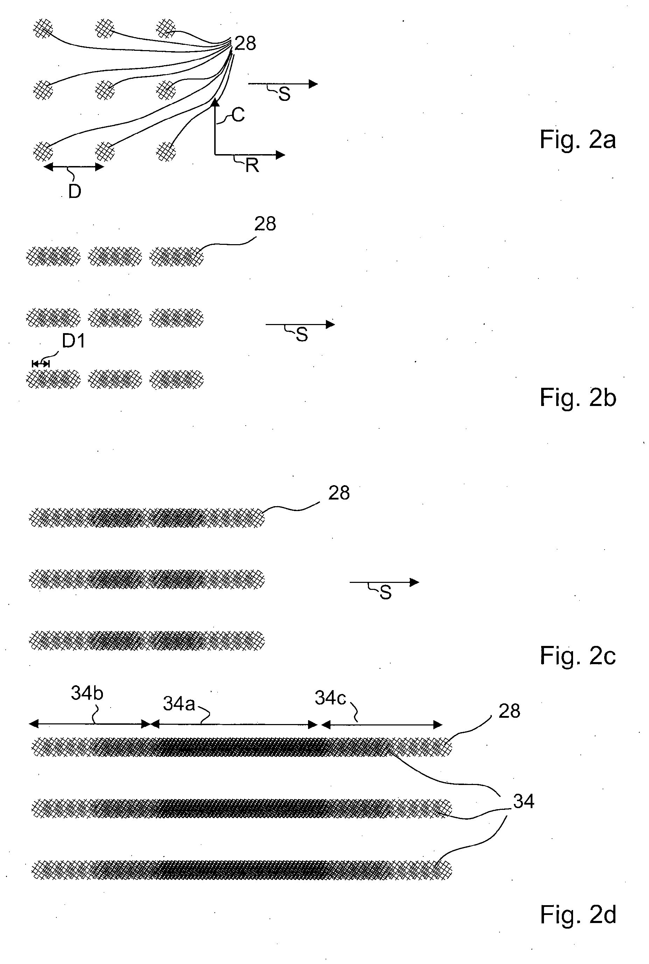

Fig. 2a - 2d illustrates an example of a movement of an array of laser foci by a control unit of a stereolithographic apparatus according to the invention in more detail.

Fig. 2a illustrates the array of spots 28 generated by a DOE producing a 3x3-array, i.e. N=3 and M=3. The array has a scan direction S, a row direction R and a column direction C. Fig. 2a illustrates a case in which the scan direction S and the row direction R are parallel. and in which the spots have the same intensity and are arranged on a regular quadratic lattice. The hatched areas illustrate the regions on the substrate in which the lithography material 24 is exposed by the spots 28. The skilled person will appreciate that the relative orientations of the scan direction S and the row direction R are not limited to what is embodied in Fig. 2a. Other cases are also possible: for example, the scan and row directions could also be orthogonal, i.e. the scan proceeds along the columns, or indeed it is potentially feasible to scan at another angle (obliquely) to fill in the whole area in one scan with reduced overlap.

In the basic case, the movement mechanism 18, 26 moves the spots with a constant speed and the laser source generates pulses with a constant frequency, wherein the frequency and the speed are chosen such that the areas exposed by subsequent pulses of the same spot are overlapping. By adjusting the number and/or separation D of the spots 28 along the scan line and/or the laser repetition rate and/or scan speed it becomes possible to control the overlap of the laser spot pulses and optimise overall plot rate and structure smoothness.

Fig. 2b illustrates the exposure pattern after 4 pulses. Each spot 28 generates a chain-like series of overlapping exposed areas, wherein the exposure dose may be below the polymerization threshold in the situation of Fig. 2b.

Fig. 2c illustrates the exposure pattern after 10 pulses. Spots 28 other than the rightmost spots in the array generate exposed areas overlapping with areas previously exposed by the neighbouring spot in the scan direction such that points in the area under consideration have been exposed by spots 28 of two distinct columns out of the array.

Fig. 2d illustrates the exposure pattern after roughly 20 pulses. The exposed areas merge into lines 34, wherein a central, main portion 34a of each line includes points having been exposed by spots 28 of each of the columns of the array, i.e. by three spots 28. Further, each line 34 includes a lead-in portion 34b and a lead-out portion 34c with roughly the length of the rows of the array having been exposed by fewer spots 28, i.e. having received a lower radiation dose than the main portion 34a. Since the main portion 34a of the line has been exposed by three spots 28, variations in the spot intensity of individual spots 28 are averaged out such that the overall smoothness of the structure being generated is improved.

The procedure of Figs. 2a - 2d can be used to generate a set of 3 parallel lines 34 in one pass / line scan, wherein the number of lines can be increased by using DOEs generating spot arrays with a greater number of spots in each column. The gaps between the lines 34 can be filled in subsequent line scans or left open depending on the target structure being generated.

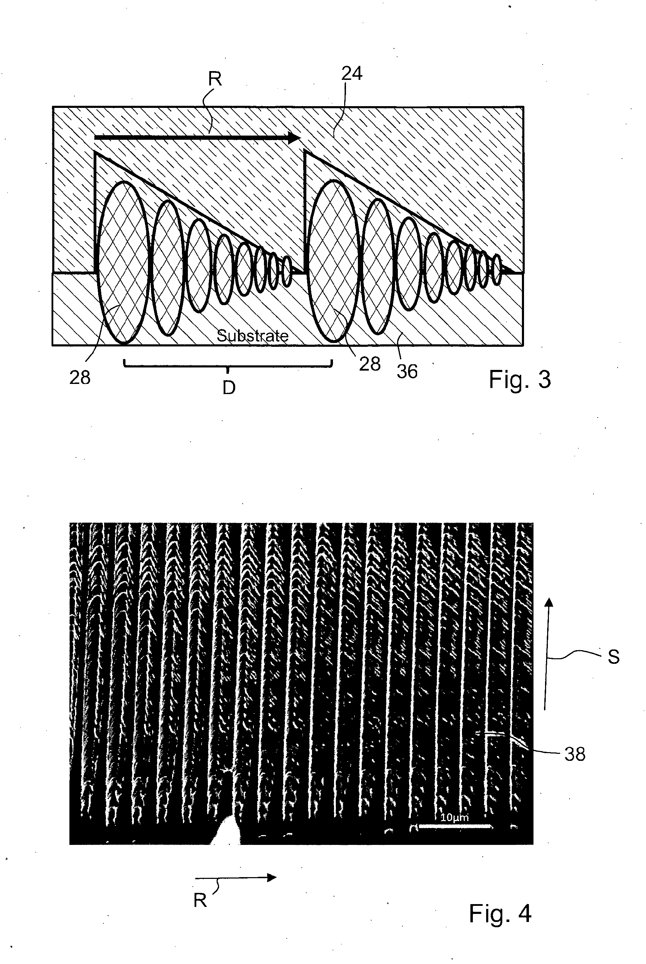

Fig. 3 is a schematic illustration with a section in the column direction for a method including the writing of different lines with different laser intensities to generate a blazed grating. It is well-known that the voxel size, i.e. the size of the volume of the material being polymerized depends on the laser intensity. The first set of lines is scanned with maximum laser intensity so as to generate a first set of parallel lines of polymerized material on a substrate 36 as illustrated in Figs. 2a - 2d. The further sets of lines are generated in the gaps between the previously generated lines, wherein the laser power is decreased for each scan. The resulting structure as illustrated in the cross-sectional view corresponds to a sawtooth profile such that the overall structure is a blazed grating 38.

Fig. 4 an SEM image of a blazed grating 38 generated according to the method of Fig. 3. The grating 38 is generated with a DOE having 5x25 spots, the rows with 5 spots being oriented in the scan direction S and the 25 spots in the column direction C. The spot separation D was 4 µm, the laser power: 8.8mW - 3.5mW and the plot rate was 0.053mm²/min.

The principle described can be generalized to larger arrays. Further, though the specification relates to a single-layer process wherein the movement takes place only in an X-Y-plane, the idea of the invention can be applied to 3D-writing structures with additional movement in the Z-direction, wherein additional overlap may exist between different Z-layers.

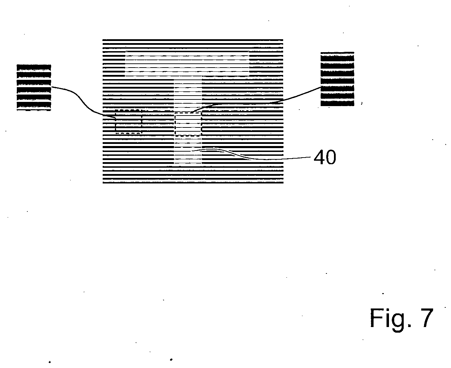

While the laser power is kept constant for each line in the method of Figs 3 and 4 and changed only when moving to the next line, the skilled person will appreciate that it is possible to modulate the laser power throughout one line scan so as to produce patterns which are non-uniform in the scan direction, i.e. where the thickness and/or height of the polymerized line structures is modulated to create specific patterns. An example of such a structure will be discussed with reference to Fig. 7.

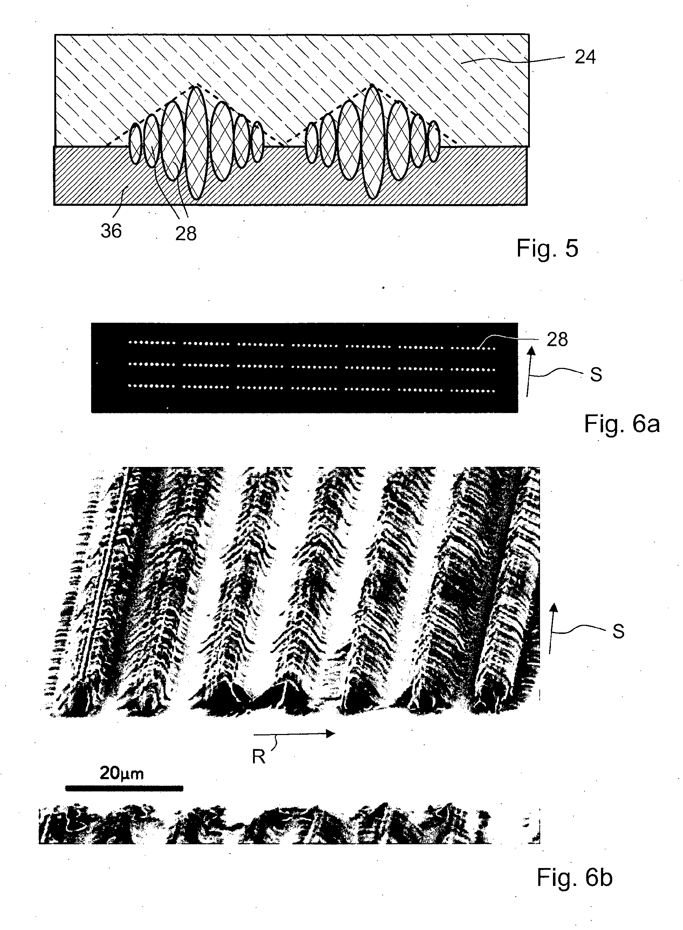

Fig. 5 is a schematic illustration of a DOE according to a second embodiment with non-uniform spot intensities in a section along the column direction orthogonal to the scan direction and Fig. 6a illustrates a top view of the 63x3 spot array with a spot separation of 1.8 µm, in which the different brightness values of the spots 28 are visible. Note that the ellipses with different size in Fig. 3 illustrate spots 28 pertaining to different line scans, the ellipses in Fig. 5 illustrate spots of one column of the array for one exposure pulse, i.e. the intensities and radiation doses of different spots in the same array may be different and vary along a triangular zig-zag curve in the column direction of the array.

Fig. 6b illustrates a grating 38 generated using a DOE according to Fig. 5 and 6a,
wherein the grating 38 can be generated in a single line scan due to the non-uniformity of the spot intensities within the array. The grating was written in a single scan with a laser power of 7.8mW and a plot rate of 0.26mm²/min.

Fig. 7 is a schematic illustration of a security feature 40 generated with an apparatus according to the invention in a top view. The pattern constituting the security feature 40 includes different regions with different line thickness created by modulating the laser power along each line scan. In other embodiments of the invention, the different regions could include blazed gratings with different blaze angles as illustrated in the inserts on the left and right side of Fig. 7.

In each of the above embodiments, the intensities of the laser foci are determined by the control unit 30 by a method including calculation of the spatio-temporal radiation pattern. The calculation accounts for indirect polymerization due to spatio-temporal proximity effects and includes calculating a spatial polymerization distribution approximating the target volume, wherein the calculation of the spatial polymerization distribution includes calculating the expected degree of polymerization at a plurality of predetermined points.

The degree of polymerization at one pre-determined point is calculated based on direct polymerization due to the multiple radiation doses resulting from the focusing of the secondary laser beams 16a - 16c in a spot at the predetermined point, and indirect polymerization due to spatio-temporal proximity effects resulting from the focusing of the secondary laser beams 16a - 16c in a spot nearby the predetermined point.

In preferred embodiments, the diffractive optical element 14 (DOE) generates a non-uniform pattern of laser foci which is optimized so as to reduce or alternatively deliberately use the spatio-temporal proximity effects. The DOE 14 of the embodiment of Fig. 1 is configured to compensate at least a roll-off and/vignetting of optical elements in a light path including the projection objective 22 to generate spots with equal intensity. In further embodiments, the DOE may be designed to further compensate at least effects of indirect polymerization due to spatial proximity effects resulting from the focusing of the secondary laser beams 16a - 16c in other spots 28 of the array. This is achieved, for example, by setting a lower intensity of the spots 28 near the centre of the array and setting a higher intensity for the outermost spots 28 having fewer direct and indirect neighbours in the array.

Similar compensation can be applied to allow for temporal proximity effects along the scan line during spot trajectory overlap (fig. 2d).

### List of reference numbers

- 10: Laser source
- 12: primary laser beam
- 14: diffractive optical element
- 16a - 16c: secondary laser beam
- 18: mirror system
- 20: beam expander
- 22: projection objective
- 24: lithography material
- 26: XYZ translation table
- 28: spot
- 30: control unit
- 32: array
- 34: line
- 34a: main portion
- 34b: lead in portion
- 34c: lead out portion
- 36: substrate
- 38: grating
- D: spot distance

## Claims

1. Stereolithographic apparatus for manufacturing a three-dimensional structure by means of laser lithography in a lithography material (24), the apparatus including:
- a laser source (10) for generating pulses a primary laser beam (12);
- a diffractive optical element (14) for splitting the primary laser beam into a plurality of secondary laser beams (16a - 16c);
- a projection objective (22) configured to focus the plurality of secondary laser beams (16a - 16c) into the lithography material (24) so as to simultaneously expose the lithography material (24) in a two-dimensional array of spots (28) in a single pulse, wherein the two-dimensional array of spots (28) includes a plurality of parallel rows and/or columns of spots;
- a movement mechanism (18, 26) for moving the plurality of spots (28) in relation to the lithography material (24) in a scan direction;
and
- a control unit (30) configured to control a laser power of the laser source (10) and the movement mechanism (18, 26) in a spatio-temporal radiation pattern calculated so as to polymerize the lithography material (24) in a target volume corresponding to the three-dimensional structure,
**characterized in that**
the control unit (30) is configured to control the movement mechanism (18, 26) and the laser source (10) such that any given point in at least a portion of the target volume is exposed by spots of at least two distinct rows or columns of the array.

2. Stereolithographic apparatus according to claim 1, wherein the three-dimensional structure is periodic in the column direction of the plurality of parallel rows of spots, wherein the two-dimensional array of spots (28) includes spots with intensities being non-uniform in the column direction of the array and uniform intensities in the scan direction.

3. Stereolithographic apparatus according to claim 1 or 2, wherein the control unit (30) is configured to control the movement mechanism (18, 26) and the laser source such that any given point in at least a portion of the target volume is exposed by spots of each of the columns out of the two-dimensional array of spots.

4. Stereolithographic apparatus according to claim 1 or 2, wherein the column direction of the two-dimensional array of spots is perpendicular to the scan direction.

5. Stereolithographic apparatus according one of claims 1 and 2, wherein the control unit (30) is configured to modulate the intensity of the primary laser beam when moving in the scan direction.

6. Stereolithographic apparatus according one of the preceding claims, wherein the spatio-temporal radiation pattern includes focusing different secondary laser beams (16a - 16c) at the same position in the lithography material at different points in time.

7. Stereolithographic apparatus according to one of the preceding claims, wherein the control unit (30) is configured to calculate said spatio-temporal radiation pattern by calculating a spatial polymerization distribution approximating the target volume, wherein the calculation of the spatial polymerization distribution includes calculating the expected degree of polymerization at a plurality of pre-determined points, wherein the degree of polymerization at one predetermined point is calculated based on:
- direct polymerization due to a radiation dose resulting from the focusing of the secondary laser beams (16a - 16c) in a spot at the predetermined point, and
- indirect polymerization due to spatio-temporal proximity effects resulting from the focusing of the secondary laser beams (16a - 16c) in a spot nearby the predetermined point.

8. Stereolithographic apparatus according one of the preceding claims, wherein the diffractive optical element (14) is configured to compensate at least a roll-off and/or vignetting of optical elements in a light path including the projection objective (22).

9. Stereolithographic apparatus according one of the preceding claims, wherein the diffractive optical element (14) is configured to compensate at least effects of indirect polymerization due to spatial proximity effects resulting from the focusing of the secondary laser beams (16a - 16c) in other spots (28) of said array of spots (28).

10. Method for controlling a stereolithographic apparatus for manufacturing a three-dimensional structure by means of laser lithography in a lithography material (24), the method including focusing plurality of secondary laser beams (16a - 16c) into the lithography material (24) so as to simultaneously expose the lithography material (24) in a plurality of spots (28) and moving the plurality of spots (28) in relation to the lithography material (24), wherein a laser power of the laser source (10) and the movement of the plurality of spots (28) mechanism are controlled according to a spatio-temporal radiation pattern calculated so as to polymerize the lithography material (24) in a target volume corresponding to the three-dimensional structure,
**characterized in that** the method includes controlling the movement mechanism (18, 26) and the laser source (10) such that any given point in at least a portion of the target volume is exposed by spots of at least two distinct columns and /or rows out of the plurality of spots of the two-dimensional array of spots.

11. Method according to claim 10, **characterized in that** the method further includes calculating said spatio-temporal radiation pattern by calculating a spatial polymerization distribution approximating the target volume, wherein the spatial polymerization distribution is calculated by calculating the expected degree of polymerization at a plurality of predetermined points, wherein the degree of polymerization at one predetermined point is calculated based on
- direct polymerization due to a radiation dose resulting from the focusing. of the secondary laser beams (16a - 16c) in a spot at the predetermined point, and
- indirect polymerization due to spatio-temporal proximity effects resulting from the focusing of the secondary laser beams (16a - 16c) in a spot nearby the predetermined point.
